# EUROPEAN PATENT APPLICATION

(11) **EP 4 848 144 A1**
(43) Date of publication of application: **02.12.2026**
(21) Application number: 26180716.8
(22) Date of filing: 22.05.2026
(51) Int. Cl.: G06N 3/045, G06Q 30/015

(54) **MULTI-SYSTEM OPTIMIZATION FRAMEWORK FOR ADAPTIVE CUSTOMER INTERACTIONS**

(30) Priority: 26.05.2025 US 202519218528
(71) Applicant: Mitel Networks Corporation, Ottawa, Ontario K2K 3K1 (CA)
(72) Inventor: X, Jyothi, Bangalore (IN); Murthy, Tejas, 56008 Bangalore (IN); Naidoo, Logendra, Ottawa, K1S 0W8 (CA)
(74) Representative: McDougall, James

(57) **Abstract**

A computer-implemented method for adaptive user interactions that includes identifying, using at least a middleware system, at least one customer interaction, and multi-modal data from a plurality of interaction touchpoints, a context case based at least on a dynamically weighted scoring function and outputs of each active neural network of a plurality of neural networks in communication with the middleware system; dynamically selecting, using at least the middleware system, at least one of the plurality of neural networks suited to the identified context case; and generating, using at least the middleware system and the selected at least one of the plurality of neural networks, a context response to the at least one customer interaction.

## Description

### Background

Many unified communications (UC) platforms use separate artificial intelligence (Al) tools for tasks like chat, sentiment analysis, and troubleshooting. However, these tools often work in isolation. Without coordination, responses can feel generic, inconsistent, or fail to match the urgency or context of the situation. This lack of integration and real-time evaluation leads to poor customer experiences and reduced operational efficiency.

Prior attempts to address this problem have fallen short. This disclosure resolves these and other problems of the art.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of an example system according to aspects of this disclosure.
FIG. 2 is a block diagram of a method for using a multi-AI tool optimization framework for adaptive customer interactions according to aspects of this disclosure.
FIG. 3 is a block diagram of a method for adaptive user interactions aspects of this disclosure.
FIG. 4 is a block diagram illustrating aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "artificial intelligence" or AI refers to any process or approach that can allow a computing device(s) to mimic human intelligence. AI can include, though is not necessarily limited to, machine learning, knowledge bases, representation learning, and deep learning.

As used herein, "machine learning" or ML refers to a subclass of AI that can allow a machine to obtain or learn information by identifying and/or extracting patterns from data. ML techniques of this disclosure can include, but are not limited to SVMs, logistic regression, decision trees, Naïve Bayes classifiers, and neural networks.

As used herein, "neural network" refers to any kind of network architecture that can include several interconnected nodes and include one or more "deep learning" algorithms. The output of the mode can depend on the input, a weight, a bias and an activation function. The output of some nodes can be connected to the input of other nodes forming a directed, weighted output where vertices or edges of the output are associated with weights, respectively.

As used herein, "deep learning" refers to a subset of ML that enables a machine to automatically discover representations needed for feature detection, prediction, classification, etc. using layers of processing. Deep learning techniques include, but are not limited to, artificial neural network or multilayer perceptron (MLP).

As used herein, "server" refers to any suitable server, computer or computing device for performing functions utilized to practice embodiments of this disclosure.

As used herein, "software" refers to programs or other operating information utilized by a processor or other computing hardware.

As used herein, "communication" can mean a conversation or correspondence or call between multiple users, such as one or a combination of telephonic, video, audio/video, text, and/or a hybrid of any of the preceding, and any type of meeting involving multiple participants.

As used herein, "a computer storage medium" can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Existing solutions rely on standalone AI tools (e.g., chatbots, sentiment analysis, or virtual assistants). Each AI tool is tasked with handling specific tasks or operations without a centralized system to coordinate or optimize their outputs. Often, rule-based systems or decision trees are used, but they lack the adaptability for real-time decision-making. Many tools also follow a "one-size-fits-all" model, offering generic responses that ignore context or urgency. While feedback loops may improve individual tools, they rarely integrate multiple AI outputs effectively, limiting their ability to deliver tailored, dynamic, and context-aware customer experiences. Further, in many customer service centers, such AI tools are deployed independently of each other and for different functions, such as a chatbot AI for responses, speech-to-text AI for transcriptions, and sentiment analysis AI for detecting customer emotions. These tools operate without any coordination, often leading to a fragmented customer experience. This lack of integration results in missed opportunities to enhance the customer experience.

Moreover, the proliferation of neural networks in unified communication (UC) solutions is evident across major providers like Cisco, NEC, Avaya, and Mitel, which all integrate AI tools to enhance collaboration and customer experiences. For example, Cisco Webex leverages AI for meeting transcription, noise suppression, and sentiment insights, while Avaya's AI-powered virtual agents handle customer inquiries with natural language processing. NEC incorporates facial recognition and AI analytics for smart collaboration, and Mitel utilizes AI to optimize call routing and agent support. These examples reflect the widespread adoption of neural networks in UC platforms to drive efficiency, personalization, and automation.

This disclosure describes systems and methods that, among other things, can facilitate dynamic integration and evaluation of multiple tools of neural networks, such as AI models (e.g., ChatGPT, IBM Watson, Microsoft Copilot, etc.) within a UC platform. Unlike traditional systems tied to a single AI tools, the herein disclosed systems and methods are configured to select and/or activate the best or most suited model for each customer interaction using multi-modal data from touchpoints (e.g., real-time data like resolution speed, customer satisfaction, and urgency). In some aspects, this disclosure describes systems and methods that utilize a middleware system configured to control and manage issues like interoperability, vendor lock-in, and adaptability, which facilitates organizations to flexibly combine AI tools for personalized and efficient customer experiences. In some aspects, the middleware system can include a machine learning model that continuously learns and evolves to meet changing customer needs which boosts satisfaction and efficiency.

In some aspects, a computer-implemented method for adaptive user interactions is disclosed that includes identifying, using at least a middleware system, at least one customer interaction, and multi-modal data from a plurality of interaction touchpoints, a context case based at least on a dynamically weighted scoring function and outputs of each active neural network of a plurality of neural networks in communication with the middleware system; dynamically selecting, using at least the middleware system, at least one of the plurality of neural networks suited to the identified context case; and generating, using at least the middleware system and the selected at least one of the plurality of neural networks, a context response to the at least one customer interaction.

In some aspects, a communication platform is disclosed for adaptive user interactions. The platform can include a processor, a middleware system in communication with the processor, and a multi-modal data source in communication with the middleware system, the multi-modal data source having data from a plurality of interaction touchpoints. A plurality of neural networks can be in communication with the middleware system. A tangible, non-transitory memory can be configured to communicate with the processor and include instructions stored thereon that, in response to execution by the processor, cause the processor to perform operations that include identify, using at least the middleware system and the multi-modal data, a context case based at least on a dynamically weighted scoring function and outputs of each active neural network of the plurality of neural networks; and dynamically select, using at least the middleware system, at least one of a plurality of neural networks suited to the identified context case.

In some aspects, a non-transitory machine-readable storage medium is disclosed that is operable on a computer and includes instructions that, when executed, cause at least one processor of the computer to identify, using at least a middleware system, at least one customer interaction, and multi-modal data from a plurality of interaction touchpoints, a context case based at least on a dynamically weighted scoring function and outputs of each active neural network of a plurality of neural networks in communication with the middleware system; select, using at least the middleware system, at least one of the plurality of neural networks suited to the identified context case; and generate, using at least the middleware system and the selected at least one of the plurality of neural networks, a context response to the at least one customer interaction.

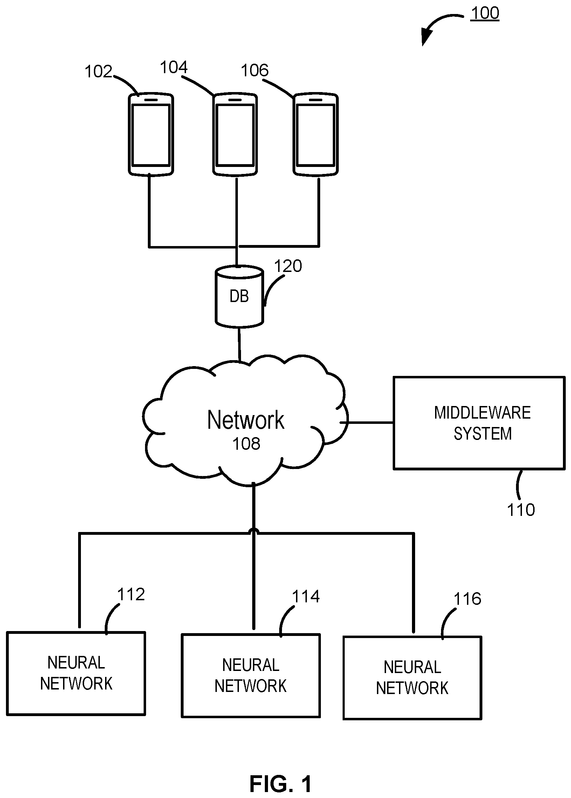

Turing to the Figures, wherein the purpose is to describe embodiments of this disclosure and not to limit the scope of the claims, FIG. 1 shows an exemplary system 100 for computer-implemented with multi-AI optimization framework for adaptive customer interactions. System 100 can include a plurality of user devices 102, 104, 106. The user devices 102, 104, 106 can be in communication with a network 108, a multi-modal database 120, a middleware system 110, and a plurality of neural networks 112, 114, 116. While only three networks are shown in FIG. 1, it is contemplated that any number of neural works and associated tools can be included or otherwise in communication with any aspect of system 100.

In some aspects, database 120 can include multi-modal data from a plurality of interaction touchpoints associated with devices 102, 104, 106. Database 120 can include information from real-time multi-modal data from touchpoints associated with devices 102, 104, 106. As used herein, the term "touchpoint" can be understood as any way a user (e.g., a consumer) can interact with an entity such as a business (e.g., including but not limited to person-to-person, through a website, an app or any form of communication). Touchpoints can include chat, voice, sensors, IoT devices, emails, and the like. The multi-modal data can be populated in database 120 that includes data from or related to chat, voice, sensors, IoT devices, emails, etc., including but not limited to customer queries, complaints, and requests, contextual metadata like location, device type, and historical interaction logs, sentiment cues and behavioral insights derived from neural network analysis, preprocessed and standardized inputs, and the like. The multi-modal data can also include one or more customer queries, customer complaints, customer requests, location, device type, historical interaction logs, sentiment cues and behavioral insights derived from an analytical output from at least one of networks 112, 114, 116, customer resolution speed, customer response accuracy, customer satisfaction, and customer historical success rates. In some aspects, database 120 can be configured to ensure compatibility with downstream neural networks and seamless integration.

In some aspects, one or more data collection servers can be in communication with database 120, network 108, and devices 102, 104, 106 to facilitate collecting and organizing multi-modal data as well as any number of data storages, such as one or more of email servers, conference databases, on-line search databases by organization participants, chat databases, databases of social media posts, video recording databases, audio recording databases, social media platforms, recording devices, and others, and includes one or more of audio, electronic text, images, and video communications.

In some aspects, network 108 can be configured to facilitate communications between user devices 102, 104, 106 and include any desired combination of wireless and wired networks, including but not limited to the Internet, a LAN, a WAN, a WLAN, a cell network (e.g. 3G, 4G, 5G and the like), WiFi, WiMAX, and the like. User devices 102, 104, 106 can be generally communicating in a wireless manner and network 108 can generally include components for communicating wirelessly with user devices 102, 104, 106.

Each user device 102, 104, 106 can be unique to a respective user (e.g., a customer, a client, etc.). In the illustrated example, user devices 102, 104 can be a mobile phone, a laptop, a tablet, as well as any suitable device, such as smart phones, table computers, laptop computers, desktop computers, game consoles, cordless phones, or the like. While only users 102, 104, 106 are shown in FIG.1, any number of users are contemplated as needed or required with respect to a communication between the user devices of FIG. 1.

In some aspects, middleware system 110 can serve as a centralized hub and collect and parse data from multiple sources and gather real-time, multi-modal data from various interaction touchpoints. As the proliferation of competing neural networks continues, system 110 provides a framework for evaluating and leveraging adjunct intelligence. System 110 can assess AI tools from different neural networks against customer-centric metrics and integrate future advancements effectively and contextually using aspects such as large language models (LLM) for intelligent routing. System 110 can include one or more databases, web servers, and machine learning models. In some aspects, system 110 can be a software layer or system that acts as an intermediary between different software applications, services, or systems, including but not limited to network 108, database 120, devices 102, 104, 106, and neural networks 112, 114, 116, to facilitate communication, data exchange, and functionality therebetween. In some aspects, system 110 can be configured for message routing, authentication, transaction management, API integration, and the like.

In some aspects, system 110 can be an AI evaluation system to address the limitations of generic AI recommendations in UC platforms. In some aspects, system 110 can be or include one or more machine learning models. In some aspects, a machine learning model of this example can be generated based on applying respective training input (e.g., multi-modal data of associated with touchpoints of devices 102, 104, 106) with, optionally, the associated information paired with the output information as applied by a machine learning algorithm(s). The machine learning algorithm(s) may accept the foregoing aspects as training input, the output information and implement training using one or more techniques. For example, the machine learning models may be trained in one or more Convolutional Neural Networks (CNN), CNN with multiple-instance learning or multi-label multiple instance learning, Recurrent Neural Networks (RNN), Long-short term memory RNN (LSTM), Gated Recurrent Unit RNN (GRU), graph convolution networks, or the like, or a combination thereof.

In some aspects, convolutional neural networks can directly learn aspects and generate and/or identify context cases of the multi-modal data, which can work extremely well when there are large amounts of data to train on, whereas the other methods can be used with either traditional computer vision features, e.g., SURF or SIFT, or with learned embeddings (e.g., descriptors) produced by a trained convolutional neural network, which can yield advantages when there are only small amounts of data to train on. The trained machine learning models of this disclosure may be configured to provide quality designations for meeting data disclosed herein, including all forms of multi-modal data, outputs of tools of neural networks, and other data thereof. Computerized methods of this disclosure that use machine learning models can include, but are not limited to, statistical analysis, autonomous or machine learning, and AI. AI may include, but is not limited to, deep learning, neural networks, classifications, clustering, and regression algorithms.

System 110 can be configured as a smart referee and integrate multiple generative AI tools, such as any tool associated with networks 112, 114, 116 (e.g., ChatGPT, GPT-3, Dalle E, PaLM, LaMDA, Claude, Gopher, MidJourney, Stable Diffusion, Gen-2, Mistral, Command R, IBM Watson, Microsoft Copilot, etc.), to evaluate outputs of each respective generative AI tool using multi-modal data that includes predefined, customer-centric metrics such as resolution speed, response accuracy, customer satisfaction, and historical success rates. In some aspects, system 110 can evaluate tools of networks 112, 114, 116 using the same dataset(s) and scenarios across all tools to ensure fair comparison. In some aspects, one or more tools associated with networks 112, 114, 116 can include generative models for content creation (e.g., ChatGPT), analytical models for reasoning and pattern recognition (e.g., IBM Watson), adjunct intelligence systems for specialized tasks (e.g., decision support, sentiment alignment, or predictive analytics). In some aspects, system 110 is configured for real-time coordination and feedback between respective neural networks 112, 114, 116 so output from one can inform or refine another's input and/or output dynamically.

By applying a structured scoring methodology, system 110 dynamically selects the most effective and context-aware response for each customer interaction. In some aspects, the system 110 can concurrently activate the most effective and context-aware response for each customer interaction, including coordinating with the respective network(s) 112, 114, 116. In some aspects, upon receiving parsed data, system 110 can dynamically select and activate deterministic tools and at least one of networks 112, 114, 116 suited to the context case, including using knowledge-based engines associated with respective APIs. By continuously evaluating performance of tools of respective network(s) 112, 114, 116 through these metrics (e.g., sentiment alignment and resolution speed), system 110 ensures that all tools work synergistically so that productivity of agents and users goes up and user experience heightened.

For example, if a sentiment analysis AI operation of system 110 detects frustration, system 110 can adjust the tool of one or more of the respective network(s) 112, 114, 116 (e.g., chatbot's response) or escalate an identified context case to a live agent in real-time. Additionally, if the speech-to-text tool transcribes incorrectly, the system triggers the chatbot to correct the error, ensuring seamless customer interactions.

In some aspects, system 110 can include a feedback mechanism for rapid on-the-fly AI model evaluation configured to improve customer experiences. In some aspects, system 110 can monitor outputs of AI tools (e.g., response(s) of a particular AI tool) to identify AI tools that may be trending as effective as well as which system(s) and/or system users (e.g., agents) are leveraging the most successful AI outputs. In turn, system 110 can pick the most effective output(s) of AI tools which can lead to resolution speeding up (e.g., since the user(s) are able to observe trends and specific outputs that have been successful before the system takes over with automation). In some aspects, stakeholders of system 100 can have a portal-view (e.g., a visualization in a dashboard or other display user interface) into which outputs of AI tools (e.g., response(s) of a particular AI tool) are trending as effective as well as which system users (e.g., agents) are leveraging the most successful AI outputs. In some aspects, users (e.g., agents) can pick the most effective output(s) of AI tools which can lead to resolution speeding up (e.g., since the user(s) are able to observe trends and specific outputs that have been successful before the system takes over with automation). One example dashboard visualization can include illustrating outputs of AI tools (e.g., responses) that are working optimally in real-time for one or more associated applications or uses.

In some aspects, The signals and/or any other feedback from the dashboard or other display user interface can be inputs that guide agent selection behavior, which can be then machine-learned to re-rank AI outputs in system 110 automatically. Such insights by system 110 and/or in the portal view are particularly advantageous for incentivizing and/or facilitating additional agents to swifter leveraging of metrics promoting the effectiveness of the AI and the best AI output pre-emptively and overall technical performance enhancement, which is beneficial to the overall system experience and all users associated therewith.

In some aspects, system 110 can be configured to identify, using at least a customer interaction and multi-modal data of database 120, a context case. In some aspects, the context case can be related to any number of situationally and/or user related contexts, including but not limited to a network connection threshold. Other example context cases that system 110 can identify can include customer behavior states, based on the multi-modal data that includes customer or user interactive data (e.g., page views, clicks, session time, etc.) and any related deviation from predicted behavior. Other example context cases that system 110 can identify can include failed authentication attempts, user interaction in a specific geographic location and/or product, unsupported device access, detection of positive sentiment, detection of negative sentiment, inconsistent customer data, conflicting interaction data, exceeding an error threshold, deviation from a user behavior pattern, change in user data (e.g., based on wearable or other sensor data), change in environmental conditions (e.g., based on GPS and/or IoT sensor data), marketing context cases, and/or the like. Any number of context cases identifiable by system 110 are contemplated in this disclosure.

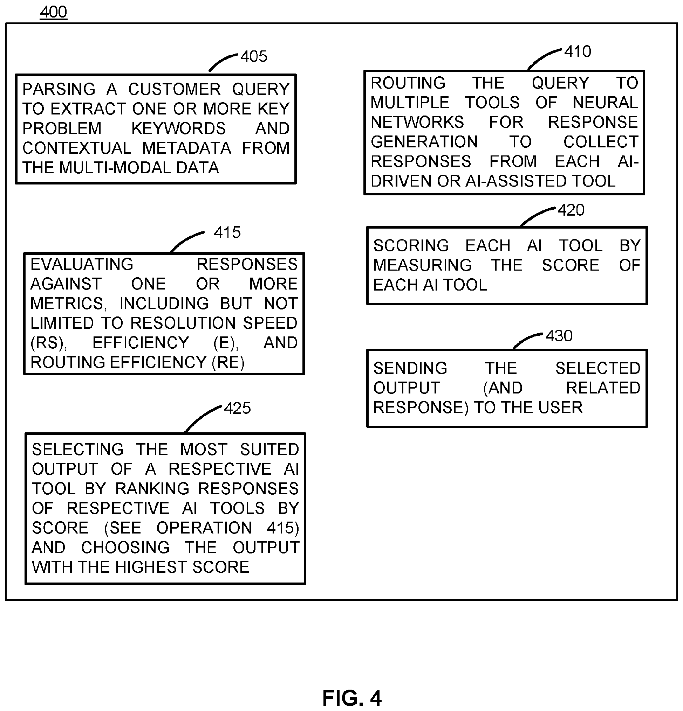

System 110 can use a dynamically weighted scoring function and outputs of each active neural network (e.g., networks 112, 114, 116) in communication with system 110. In some aspects, the dynamically weighted scoring function can continuously evaluate the multi-modal data to generate insight analytics based on resolution times, customer satisfaction scores, engagement levels, etc., pursuant to the identifying of the context case. In some aspects, the dynamically weighted scoring function can consider output alignment with the particular identified context case, speed and efficacy of problem-solving or recommendations, an evaluated tone and/or empathy in user interactions (e.g., agent and customer), a sentiment alignment defined by the evaluated tone, a forecasted success, engagement metrics, ticket time metrics, time between calls, etc. In some aspects, the dynamically weighted scoring function can evaluate how well outputs of AI tools associated with networks 112, 114, 116 integrate harmoniously within the interaction flow as well as adjunct metrics to assess the ability of system 110 to handle emergent challenges, including adaptability to unstructured or ambiguous scenarios. For example, system 110 can assign scores in real time using one or more of these weighted user metrics that adjust based on context cases that include urgency and/or sentiment (e.g., resolution time not normally this rapid). System 110 can also measure synergy of AI tools and evaluate how well tools complement each other by combining outputs for more effective responses (e.g., Watson IVR coupled with Stanford Agent Selection). One example implementation of aspects of the dynamically weighted scoring function is shown and described in FIG. 4 later in this disclosure.

System 110 can dynamically select at least one of the plurality of neural networks suited to the identified context case. In some aspects, system 110 can dynamically select by cross-validating outputs of networks 112, 114, 116 and recommend, based on any system 110 identified inconsistencies in the outputs of networks 112, 114, 116, at least one of networks 112, 114, 116 that is aligned with the needs of the identified context case. In some aspects, system 110 can facilitate combinability of AI outputs of different neural networks (e.g., networks 112, 114, 116, etc.) by normalizing and cross-validating the data from disparate tools, identifying inconsistencies, and ensure recommendations align with customer-specific needs. System 110 can use feedback loops to analyze the success of implemented recommendations against measurable outcomes, such as by collecting customer feedback, collecting performance data, validating scores, refining resolution, considering resolution rates, and satisfaction scores. In turn, this data can continuously incorporate into its scoring algorithm so that system 110 continuously adapts and improves over time. In some aspects, system 110 can dynamically select using real-time dynamic weighting by adjusting a priority value of one or more parameters based on the identified context case. The one or more parameters can include at least one of a resolution speed, a sentiment alignment, and an accuracy based on customer feedback.

System 110 can generate, using at least the selected neural network 112, 114, 116, a context response to the at least one customer interaction. In some aspects, system 110 can assign roles to each of the plurality of neural networks based at least on the identified context case. For example, in assigning roles, tasks such as context interpretation and accuracy checks can be handled by the most capable tool of a respective network 112, 114, 116. In some aspects, the context response can include one or more responsive troubleshooting workflow solutions. In some aspects, system 110 can be used to generate multiple outputs of networks 112, 114, 116 simultaneously such as technical solutions to an identified context case for troubleshooting, personalized or otherwise customized recommendations to a context case based on user history or other multi-modal data, sentiment-sensitive responses to one or more context cases aligned with emotional context, predictive insights derived from historical and real-time data analysis.

In one example, in a technical support solution, the context case may include a customer describing an issue with a network connection. System 110 can activate a plurality of tools associated with networks 112, 114, 116 to generate potential troubleshooting workflows. Each output can be evaluated by system 110 against performance metrics, such as estimated resolution time and alignment with similar historical cases. System 110 can rank the recommendations and select the most efficient workflow, reducing resolution time significantly (e.g., by up to 30% in some examples) while improving customer satisfaction.

In some aspects, system 110 can combine outputs of at least one of the active neural networks (e.g., network 112, 114, 116) into a synthesized response. In some aspects, the synthesized response can match a predetermined tone (e.g., one or more customer specific or identified tones based on related multi-modal data). In some aspects, the synthesized response can exceed an accuracy threshold due to resolution logic of system 110. In some aspects, system 110 can combine complementary outputs from AI tools of multiple neural networks into a unified response. For instance, sentiment analysis may refine a chatbot's response to match tone while resolution logic ensures accuracy. In some aspects, upon system 110 determining that one or more outputs of the active neural network of the plurality of neural networks is below a quality threshold (e.g., unresolved issues or customer dissatisfaction), system 110 can transmit an escalation notification that triggers an output response action (e.g., escalates to human agents or activates alternative workflows in real time).

In some aspects, system 110 can predict at least of networks 112, 114, 116 most suited to the identified context case. System 110 can be trained on historical performance data and scenario-specific benchmarks of the multi-modal data from the interaction touchpoints; simulating an impact of integrating one or more additional neural networks based on preliminary outputs of the one or more additional neural networks; and utilizing onboarding adjunct intelligence systems and scoring algorithms to analyze capabilities of the one or more additional neural networks. Based on the analyzed capabilities thereof, system 110 can predict the network(s) 112, 114, 116 most suited for the identified context case. System 110 can also be configured to predict future neural network integrations. By bridging gaps between competing AI tools, system 110 introduces transparency into AI evaluation processes, allowing businesses to deploy tailored, metrics-driven recommendations. This helps us transition from a one-size-fits-all approach to a dynamic, customer-focused solution.

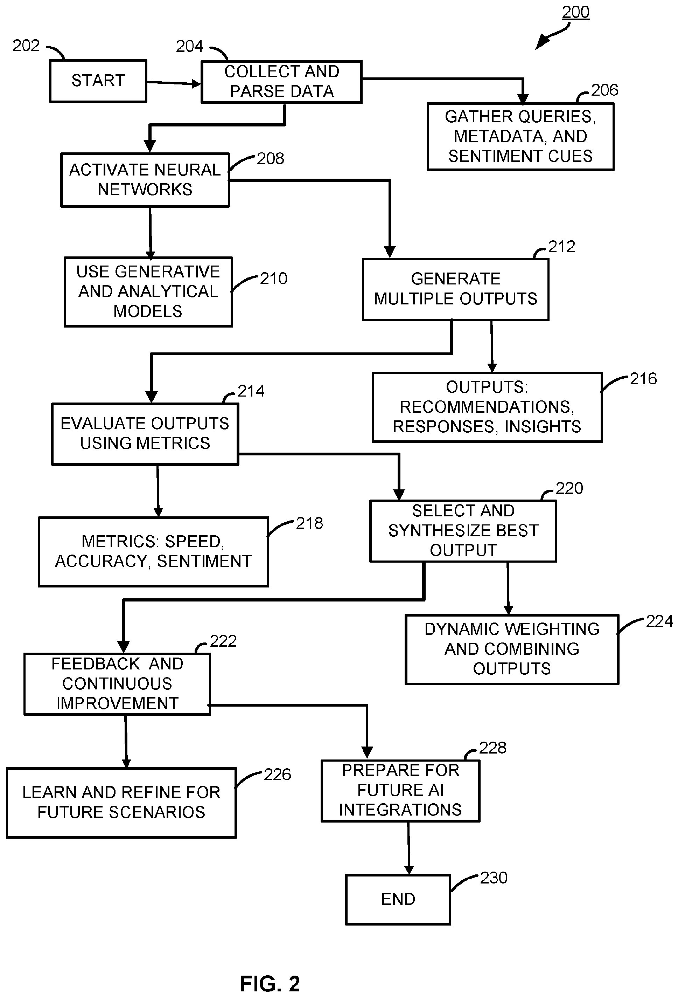

FIG. 2 is a block diagram of a method 200 for use of a multi-AI tool optimization framework for adaptive customer interactions. Method 200 can commence at step 202 and at step 204, multi-modal data can be collected and parsed by the middleware system (e.g., system 110) of the framework. At step 206, aspects such as queries, metadata, and sentiment cues are gathered by the middleware system and at step 208, the middleware system can activate one or more neural networks and any associated tools (e.g., activate the most effective and context-aware response for each customer interaction and coordinating with one or more of respective neural networks). At step 210, one or more models of the associated neural networks can use generative and analytical machine learning models and at step 212, multiple outputs from associated AI tools can be generated, including outputs related to an identified context case that is related to the collected and parsed multi-modal data. At step 216, recommendations, responses, and insights of the generated outputs are considered and at step 214, outputs of each AI tools are evaluated by the middleware system using metrics.

At step 218, the metrics include aspects such as output speed, accuracy, sentiment, etc., though can also include other metrics such as a dynamically weighted scoring function, sentiment alignment, resolution speed and the like. At step 220, the middleware system can select and synthesize the optimal, most-suitable output to the corresponding identified context case. At step 224, the middleware system can select and synthesize by applying a dynamically weighted scoring function and combining the previously generated outputs (see step 212). At step 222, feedback and continuous improvement are considered by the middleware system. In some aspects, step 222 can include use or incorporation of a feedback mechanism, as previously discussed, for AI model evaluation. Step 222 can include incorporation of the portal-view (e.g., a visualization in a dashboard or other display user interface) into which outputs of AI tools (e.g., response(s) of a particular AI tool) can be shown as trending as effective to leverage increased output adoption across the system. .At step 226, the middleware system can learn and refine future scenarios, including outputs, context cases, and synthesized responses. At step 228, the middleware system can continuously prepare for future integrations of AI tools from the neural networks and at step 230, the method 200 can conclude.

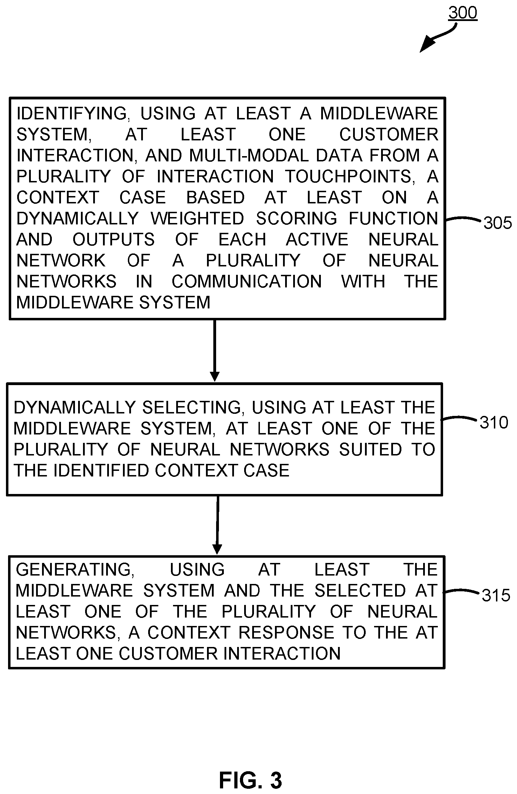

FIG. 3 is a block diagram of a method 300 for adaptive user interactions. Method 300 at step 305 can include identifying, using at least a middleware system, at least one customer interaction, and multi-modal data from a plurality of interaction touchpoints, a context case based at least on a dynamically weighted scoring function and outputs of each active neural network of a plurality of neural networks in communication with the middleware system. Method 300 at step 310 can include dynamically selecting, using at least the middleware system, at least one of the plurality of neural networks suited to the identified context case. Method 300 at step 315 can include generating, using at least the middleware system and select at least one of the plurality of neural networks, a context response to at least one customer interaction.

In some aspects, one example implementation of the dynamically weighted scoring function 400 is illustrated in FIG. 4 where at operation 405, the dynamically weighted scoring function can include parsing a customer query to extract one or more key problem keywords and contextual metadata from the multi-modal data (e.g., customer history, sentiment, urgency, etc.). For example, if urgency is expressed, resolution time can take precedence over personalization. At operation 410, the dynamically weighted scoring function can include routing the query to multiple tools of neural networks for response generation to collect responses from each AI-driven or AI-assisted tool. At operation 415, the dynamically weighted scoring function can include evaluating responses against one or more metrics, including but not limited to resolution speed (RS), efficiency (E), and routing efficiency (RE). RS can be understood as a measure of the predicted time to resolve the issue. E can be understood as accuracy and sentiment match. RE can be understood as a measurable evaluation of whether the AI tool is a match for the query. At operation 420, the dynamically weighted scoring function can include scoring each AI tool by measuring the score of each AI tool according to the following example: Score = Weight1/RS + (Weight2 × E) + (Weight3 × RE). At operation 425, the dynamically weighted scoring function can include selecting the most suited output of a respective AI tool by ranking responses of respective AI tools by score (see operation 415) and choosing the output with the highest score. At operation 430, the dynamically weighted scoring function can include sending the selected output (and related response) to the user (e.g., customer).

According to certain embodiments, systems and methods of this disclosure can be included in user-facing front-end including software, firmware, and/or hardware to integrate at least a portion of a communication of a user from a user device. In some embodiments, this interface of a user device associated with systems and methods herein can include a mobile application ("app") or other software executable on a user device, such as a mobile computing device (e.g. a smart phone). It is understood that any mobile computing device of this disclosure can be configured to communicate with one or more servers. In another embodiment, the interface may include a web-based application accessible through a browser or other software, or a desktop application. The app can be configured to provide or support functionality of this disclosure.

According to certain embodiments, aspects of this disclosure, including one or more databases, middleware systems, neural networks and the like, can be in communication with one or more servers, can each be connected directly or wirelessly (e.g., 3G/4G/5G, RF, a local wireless network, and/or the like). The server(s) can be operatively connected to one or more web servers across one or more networks, each server operable to permanently store and/or continuously update a database of master data. Servers of this disclosure can include back-end architecture with, or be in communication with, one or more of database server(s), whereby functionality of the system may be split between multiple servers, which may be provided by one or more discrete providers. In an example embodiment, the database server may store master data as well as logging and trace information. Software of any related server may be based on the object-relational database system PostgresSQL. The database server is not limited, other approaches may be used as needed or required. This database server is not limited to only organizing and storing data and instead, it may be also used to eliminate a need of having an application server (e.g., 2nd Layer). In some embodiments, almost every functional requirement may be realized by using the database's programming language, PL/pgSQL. The database may also provide an API to the web server for data interchange based on JSON specifications. In some embodiments, the database server may also directly interact with the described functionality of respective computing devices.

In some examples, a computer system of this disclosure can be capable of implementing aspects of the present disclosure in accordance with one or more embodiments described herein, including those examples shown in FIGS. 1-4. It should be appreciated that any computer system of examples of this disclosure may be implemented within a single computing device or a computing system formed with multiple connected computing devices. The computer system of this disclosure may be configured to perform various distributed computing tasks, in which processing and/or storage resources may be distributed among the multiple devices.

In some examples, the computer system can include a processing unit ("CPU"), a system memory, and a system bus that couples the memory to the CPU. The computer system further includes a mass storage device for storing program modules. The program modules may be operable to analyze data from any herein disclosed data feeds, databases, classify user states based on the data feeds, determine responsive actions, and/or control any related operations. The program modules may include an application for performing data acquisition and/or processing functions as described herein. In some examples, the mass storage device can be connected to the CPU through a mass storage controller connected to the bus. The mass storage device and its associated computer-storage media provide non-volatile storage for the computer system. Although the description of computer-storage media contained herein refers to a mass storage device, such as a hard disk or CD-ROM drive, it should be appreciated by those skilled in the art that computer-storage media can be any available computer storage media that can be accessed by the computer system.

By way of example and not limitation, computer storage media (also referred to herein as "computer-readable storage medium" or "computer-readable storage media") may include volatile and non-volatile, removable and non-removable media implemented in any method or technology for storage of information such as computer-storage instructions, data structures, program modules, or other data. For example, computer storage media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer system. "Computer storage media", "computer-readable storage medium" or "computer-readable storage media" as described herein do not include transitory signals.

According to various embodiments, the computer system may operate in a networked environment using connections to other local or remote computers through a network via a network interface unit connected to the bus. The network interface unit may facilitate connection of the computing device inputs and outputs to one or more suitable networks and/or connections such as a local area network (LAN), a wide area network (WAN), the Internet, a cellular network, a radio frequency (RF) network, a Bluetooth-enabled network, a Wi-Fi enabled network, a satellite-based network, or other wired and/or wireless networks for communication with external devices and/or systems.

In some examples, the computer system may also include an input/output controller for receiving and processing input from any of a number of input devices. Input devices may include one or more of keyboards, mice, stylus, touchscreens, microphones, audio capturing devices, and image/video capturing devices. An end user may utilize the input devices to interact with a user interface, for example a graphical user interface, for managing various functions performed by the computer system. The bus may enable the processing unit to read code and/or data to/from the mass storage device or other computer-storage media.

In some examples, the computer-storage media may represent apparatus in the form of storage elements that are implemented using any suitable technology, including but not limited to semiconductors, magnetic materials, optics, or the like. The computer-storage media may represent memory components, whether characterized as RAM, ROM, flash, or other types of technology. The computer storage media may also represent secondary storage, whether implemented as hard drives or otherwise. Hard drive implementations may be characterized as solid state or may include rotating media storing magnetically-encoded information. The program modules, which include the data feed application, may include instructions that, when loaded into the processing unit and executed, cause the computer system to provide functions associated with one or more embodiments illustrated in the figures of this disclosure. The program modules may also provide various tools or techniques by which the computer system may participate within the overall systems or operating environments using the components, flows, and data structures discussed throughout this description.

In some examples, the program modules may, when loaded into the processing unit and executed, transform the processing unit and the overall computer system from a general-purpose computing system into a special-purpose computing system. The processing unit may be constructed from any number of transistors or other discrete circuit elements, which may individually or collectively assume any number of states. More specifically, the processing unit may operate as a finite-state machine, in response to executable instructions contained within the program modules. These computer-executable instructions may transform the processing unit by specifying how the processing unit transitions between states, thereby transforming the transistors or other discrete hardware elements constituting the processing unit.

Encoding the program modules may also transform the physical structure of the computer-storage media. The specific transformation of physical structure may depend on various factors, in different implementations of this description. Examples of such factors may include but are not limited to the technology used to implement the computer-storage media, whether the computer storage media are characterized as primary or secondary storage, and the like. For example, if the computer storage media are implemented as semiconductor-based memory, the program modules may transform the physical state of the semiconductor memory, when the software is encoded therein. For example, the program modules may transform the state of transistors, capacitors, or other discrete circuit elements constituting the semiconductor memory.

As another example, the computer storage media may be implemented using magnetic or optical technology. In such implementations, the program modules may transform the physical state of magnetic or optical media, when the software is encoded therein. These transformations may include altering the magnetic characteristics of particular locations within given magnetic media. These transformations may also include altering the physical features or characteristics of particular locations within given optical media, to change the optical characteristics of those locations. Other transformations of physical media are possible without departing from the scope of the present description, with the foregoing examples provided only to facilitate this discussion.

In some examples, the systems and methods of this disclosure can provide for dynamic integration and evaluation of multiple AI models, including any herein mentioned generative AI model, within a UC platform. Unlike traditional systems tied to a single AI, the herein disclosed systems and methods select the most-suited model for each interaction using real-time data like resolution speed, customer satisfaction, and urgency. In some aspects, the systems and methods can use a middleware system resolves issues such as interoperability, vendor lock-in, and adaptability, allowing organizations to flexibly combine AI tools for personalized, efficient customer experiences. The middleware system can also continuously learn and evolve to meet changing customer needs, boosting satisfaction and efficiency.

The present invention has been described above with reference to a number of exemplary embodiments and examples. It will be recognized that changes and modifications may be made to the exemplary embodiments without departing from the scope of the present invention. These and other changes or modifications are intended to be included within the scope of the present invention, as expressed in the following claims.

## Claims

1. A computer-implemented method for adaptive user interactions, comprising:
identifying, using at least a middleware system, at least one customer interaction, and multi-modal data from a plurality of interaction touchpoints, a context case based at least on a dynamically weighted scoring function and outputs of each active neural network of a plurality of neural networks in communication with the middleware system;
dynamically selecting, using at least the middleware system, at least one of the plurality of neural networks suited to the identified context case; and
generating, using at least the middleware system and the selected at least one of the plurality of neural networks, a context response to the at least one customer interaction.

2. The computer-implemented method of claim 1, further comprising:
assigning, by the middleware system, roles to each of the plurality of neural networks based at least on the identified context case.

3. The computer-implemented method of claim 1 or claim 2, wherein the dynamically selecting comprises:
cross-validating, using at least the middleware system, outputs of the plurality of neural networks; and
recommending, using at least the middleware system and based on identified inconsistencies in the outputs of the plurality of neural networks, the at least one of the plurality of the neural networks aligned with needs of the identified context case.

4. The computer-implemented method of any preceding claim, wherein the dynamically weighted scoring function continuously evaluates the multi-modal data to generate insight analytics based on resolution times, customer satisfaction scores, and engagement levels.

5. The computer-implemented method of any preceding claim, wherein the context case is related to a network connection threshold, and wherein the context response comprises one or more responsive troubleshooting workflow solutions.

6. The computer-implemented method of any preceding claim, wherein the dynamically selecting comprises real-time dynamic weighting by adjusting a priority value of one or more parameters based on the identified context case, the one or more parameters comprising at least one of a resolution speed, a sentiment alignment, and an accuracy based on customer feedback.

7. The computer-implemented method of any preceding claim, further comprising:
combining the outputs of at least one of the active neural networks into a synthesized response, and wherein the synthesized response matches a predetermined tone or wherein the synthesized response exceeds an accuracy threshold due to resolution logic of the middleware system.

8. The computer-implemented method of any preceding claim, further comprising:
upon determining that one or more outputs of the active neural network of the plurality of neural networks is below a quality threshold, transmitting an escalation notification that triggers an output response action.

9. The computer-implemented method of any preceding claim, further comprising:
predicting, by the middleware system, at least one of the plurality of neural networks most suited to the identified context case by:
training the middleware system on historical performance data and scenario-specific benchmarks of the multi-modal data from the plurality of interaction touchpoints;
simulating an impact of integrating one or more additional neural networks based on preliminary outputs of the one or more additional neural networks; and
utilizing onboarding adjunct intelligence systems and scoring algorithms to analyze capabilities of the one or more additional neural networks.

10. The computer-implemented method of any preceding claim, wherein the plurality of interaction touchpoints comprise chat, voice, sensors, IoT devices, and emails, wherein the dynamically weighted scoring function considers output alignment with the context case, an evaluated tone, a sentiment alignment defined by analyzed tone, and a forecasted success, and wherein the multi-modal data comprises one or more customer queries, customer complaints, customer requests, location, device type, historical interaction logs, sentiment cues and behavioral insights derived from an analytical output from at least one of the plurality of neural networks, a customer resolution speed, customer response accuracy, customer satisfaction, and customer historical success rates.

11. A communication platform for adaptive user interactions, comprising:
a processor;
a middleware system;
a multi-modal data source in communication with the middleware system, the multi-modal data source comprising data from a plurality of interaction touchpoints;
a plurality of neural networks in communication with the middleware system;
a tangible, non-transitory memory configured to communicate with the processor, the tangible, non-transitory memory having instructions stored thereon that, in response to execution by the processor, cause the processor to perform operations comprising:
identify, using at least the middleware system and the multi-modal data, a context case based at least on a dynamically weighted scoring function and outputs of each active neural network of the plurality of neural networks; and
dynamically select, using at least the middleware system, at least one of a plurality of neural networks suited to the identified context case.

12. The platform of claim 11, the operations further comprise:
generate, using at least the middleware system and the selected at least one of the plurality of neural networks, a context response to at least one customer interaction.

13. The platform of claim 11 or claim 12, the operations further comprise:
combine the outputs of at least one of the active neural networks into a synthesized response that matches a predetermined tone and/or that exceeds an accuracy threshold due to resolution logic of the middleware system.

14. The platform of any of claims 11 to 13, wherein the plurality of interaction touchpoints comprise chat, voice, sensors, IoT devices, and emails, and wherein the multi-modal data comprises one or more customer queries, customer complaints, customer requests, contextual data that includes location, device type, and historical interaction logs and/or wherein the dynamically weighted scoring function considers output alignment with the context case, an evaluated tone, a sentiment alignment defined by analyzed tone, and a forecasted success.

15. A non-transitory machine-readable storage medium operable on a computer and comprising instructions that, when executed, cause at least one processor of the computer to:
identify, using at least a middleware system, at least one customer interaction, and multi-modal data from a plurality of interaction touchpoints, a context case based at least on a dynamically weighted scoring function and outputs of each active neural network of a plurality of neural networks in communication with the middleware system;
select, using at least the middleware system, at least one of the plurality of neural networks suited to the identified context case; and
generate, using at least the middleware system and the selected at least one of the plurality of neural networks, a context response to the at least one customer interaction.
